# FASCICULE DE BREVET EUROPEEN

(11) **EP 1 129 313 B1**
(45) Date de publication et mention de la délivrance du brevet: **05.06.2002**
(21) Numéro de dépôt: 99949054.3
(22) Date de dépôt: 14.10.1999
(51) Int. Cl.: F16L 9/147, F16L 11/14, F16L 1/16, F16L 1/24, F16L 15/04

(54) **CONDUIT D'INSTALLATION POUR LA CONSTRUCTION D'UN RESEAU DE TRANSPORT SUBAQUATIQUE DE FLUIDE, D'ENERGIE, OU DE SIGNAUX**
ROHRLEITUNG ZUR HERSTELLUNG EINES UNTER WASSER LIEGENDEN FLÜSSIGKEITS-, ENERGIE- ODER DATENÜBERTRAGUNGSNETZ
INSTALLATION CONDUIT FOR CONSTRUCTING AN UNDERWATER TRANSPORT SYSTEM FOR FLUID, ENERGY OR SIGNALS

(30) Priorité: 14.10.1998 FR 9813040
(43) Date de publication de la demande: 05.09.2001
(73) Titulaire: Novoplastic, 01200 Bellegarde sur Valserine (FR)
(72) Inventeur: TRICHARD, Claude, F-60480 Saint-André Farivillers (FR); PIRONY, Eric, F-01320 Chatenay (FR); TRIMMINGS, David, Hitchin Herts SG4 9QP (GB)
(74) Mandataire: Guerre, Dominique
(86) Numéro de dépôt international: FR9902506
(87) Numéro de publication internationale: WO0022335

(56) Documents cités:
- EP-A- 0 341 144
- WO-A-95/22712
- WO-A-96/17198
- CH-A- 277 798
- DE-A- 2 544 194
- FR-A- 2 338 131
- FR-A- 2 756 605
- GB-A- 1 171 122
- GB-A- 2 169 913
- US-A- 3 180 365
- US-A- 4 597 065
- US-A- 4 606 378
- US-A- 5 194 208

## Description

L'invention concerne un conduit d'installation pour le transport subaquatique de fluide, d'énergie, ou de signaux.

Par "fluide", on entend tout corps ou substance à l'état liquide ou gazeux, sous pression, susceptible d'être transporté dans tout conduit approprié, séparant de manière étanche ledit fluide par rapport à - l'extérieur, par exemple un tuyau ou une canalisation.

Par "énergie", on entend principalement mais non exclusivement une énergie électrique, par exemple un courant électrique basse ou haute tension, faible ou fort, circulant selon tout moyen approprié, isolé par rapport à l'extérieur, par exemple un câble électrique mono-fil ou multi-fils.

Par "signaux", on entend tous signaux numériques ou analogiques supportés par une grandeur physique, par exemple optique, circulant de manière isolée par rapport à l'extérieur, par exemple dans un câble à fibres optiques.

Différentes circonstances requièrent de franchir tout obstacle aquatique, tels que rivière, canal, lac, bras de mer ou océan, voire même une canalisation à ciel ouvert ou réseau d'égouts, pour acheminer un fluide, une énergie, ou des signaux, d'un point à un autre.

Pour ce faire, différentes techniques sont mises en oeuvre pour mettre en place ou implanter de manière submergée un ou des conduits composites d'installation, dans lesquels sont poussés, soufflés, ou tirés les câbles ou tuyaux proprement dits, par exemple câbles électriques ou tuyaux.

S'agissant d'obstacles de faible largeur, le conduit d'installation est mis en place par fonçage, c'est-à-dire en réalisant un forage dirigé, passant sous l'obstacle, le conduit d'installation étant accroché à la tête de forage, en contournant l'obstacle.

S'agissant d'obstacles relativement longs, on préfère actuellement la technique d'ensouillage. Cette solution consiste à enfouir le conduit d'installation dans le sous-sol de l'obstacle aquatique à l'aide d'une ensouilleuse, qui est une sorte de charrue tractée de la surface par tous moyens appropriés.

On connaît ainsi deux techniques ou méthodes d'ensouillage, appelées respectivement directe et indirecte.

S'agissant de réseaux de transport terrestre, le ou les conduits d'installation sont traditionnellement mis en place avec des travaux de génie civil, consistant pour l'essentiel à creuser une tranchée, à y installer le conduit, puis à reboucher la tranchée. Même si le génie civil peut être plus ou moins mécanisé, cette mise en place est aujourd'hui particulièrement coûteuse.

Au départ de la présente invention, la Demanderesse a eu l'idée d'utiliser les réseaux aquatiques existant sur terre, naturels ou artificiels, pour y disposer un ou des conduits d'installation, au lieu de procéder par génie civil traditionnel.

Afin d'utiliser ces réseaux aquatiques du type fleuves ou rivières, pour mettre en oeuvre les méthodes de pose existantes, il était nécessaire de disposer d'un conduit d'installation susceptible de descendre par gravité au fond de l'eau, étanche vis-à-vis de l'eau douce ou salée, et susceptible d'être tiré sur de longues distances à partir de tourets de stockage.

Pour réaliser l'étanchéité, on connaît par exemple selon le document CH-277 798 des conduits étanches pour protéger des câbles électriques. Les conduits décrits sont par exemple constitués de deux manteaux concentriques en matière isolante, entre lesquels sont intercalées une ou plusieurs couches métalliques très minces. Ces couches métalliques peuvent être constituées de deux enroulements concentriques de spires espacées. Les spires de l'un des enroulements sont par exemple décalées longitudinalement de manière à recouvrir les interstices de deux spires de l'autre enroulement. Les conduits ainsi décrits ne présentent pas les propriétés requises par une pose et une utilisation en milieu subaquatique. Les conduits ne sont pas lestés et les couches métalliques très minces contribuent uniquement à l'étanchéité du conduit. Le domaine d'application ou d'utilisation de ces conduits est donc totalement différent du domaine technique auquel se rapporte la présente invention. Le document WO- 96/17198 décrit un conduit d'installation selon les caractéristiques du préambule de la revendication 1.

L'objet de la présente invention vise donc à réaliser de façon simple un conduit d'installation susceptible d'être immergé par gravité au fond de l'eau et présentant des propriétés de résistance mécanique, de flexibilité et d'étanchéité, satisfaisantes et compatibles avec les méthodes de pose existantes.

L'objet de la présente invention est atteint à l'aide d'un conduit d'installation constitué par au moins une gaine intérieure, une armure métallique comportant au moins un enroulement hélicoïdal d'un feuillard métallique dont les spires ménagent entre elles un interstice et une gaine extérieure disposée autour de l'armure métallique, caractérisé en ce que les interstices sont étanchés avec un matériau d'étanchéité, du type graisse, servant de lubrifiant vis-à-vis du déplacement relatif des spires entre-elles et de la gaine extérieure, laquelle constitue une gaine de serrage extérieure et de confinement de la graisse, l'armure métallique enroulée autour de la gaine constituant avec la graisse un moyen d'étanchéité dont le poids par unité de longueur est calibré pour constituer un lest périphérique de sorte que le poids par unité de longueur du conduit est supérieur au poids d'eau déplacé par son immersion.

Avantageusement, le poids par unité de longueur dudit conduit est supérieur de 10 à 30 % du poids d'eau déplacée par ledit conduit.

Avantageusement, l'armure métallique est obtenue à l'aide d'un enroulement hélicoïdal concentrique autour de la gaine intérieure de deux feuillards métalliques relativement lourds, dont les spires forment des interstices et sont décalées de manière que les spires extérieures recouvrent les interstices entre spires intérieures, lesdits interstices étant remplis par le matériau d'étanchéité de manière à assurer une bonne étanchéité longitudinale dudit conduit.

La présente invention est maintenant décrite par référence au dessin annexé, dans lequel :
- la figure 1 représente de manière schématique un réseau subaquatique étanche pour le transport de fluide, d'énergie, ou de signaux, obtenu notamment par l'assemblage d'éléments d'un conduit composite d'installation conforme à l'invention ;
- la figure 2 est une vue en coupe longitudinale d'un mode d'exécution du conduit composite ;
- les figures 3 à 5 représentent, en coupe transversale, trois autres modes d'exécution différents d'un conduit composite d'installation conforme à l'invention ;
- la figure 6 représente, en coupe axiale ou longitudinale, un dispositif de connexion mis en place sur deux extrémités adjacentes de deux éléments de conduit d'installation conforme à l'invention ;
- les figures 7 et 8 représentent, respectivement, une coupe longitudinale et axiale et une coupe transversale par son milieu d'un connecteur appartenant au dispositif de connexion représenté à la figure 6 ;
- la figure 9 représente un dispositif de traction selon l'invention, mis en place dans l'extrémité libre d'un conduit d'installation selon l'invention,
- les figures 10 et 11 représentent respectivement en coupe axiale et de face, la bague antifluage du dispositif de figure 9 ;
- la figure 12 est une vue partielle en coupe et à échelle agrandie du détail A de figure 10 ;
- la figure 13 est une vue en coupe transversale d'une autre forme d'exécution du conduit composite d'installation ;
- les figures 14 et 15 représentent schématiquement des méthodes de pose pour un conduit d'installation conforme à l'invention ;
- la figure 16 représente en coupe une variante d'exécution du dispositif de connexion associé au conduit d'installation conforme à l'invention.

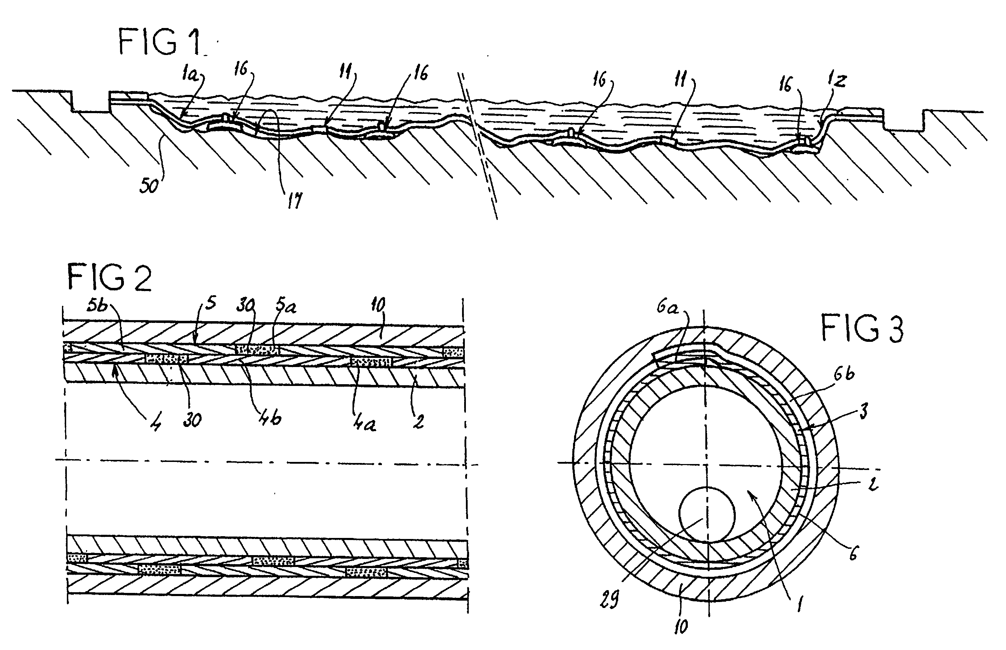

Conformément à la figure 1, on a représenté une structure terrestre 50 comportant' une partie immergée par une étendue aqueuse, dont le fond 17 est submergé par cette dernière.

C'est sur ce fond 17 de manière submergée qu'est mis en place le réseau de transport subaquatique conforme à l'invention, obtenu par assemblage des éléments ou composants précédemment définis.

Conformément aux figures 2 à 4, ce réseau est obtenu principalement avec des éléments de conduit 1 composite d'installation.

Chaque conduit 1 composite d'installation comprend :
- une gaine intérieure 2 obtenue par exemple par extrusion d'une matière plastique appropriée,
- et un lest périphérique 3, solidaire à l'extérieur de et avec la gaine 2, s'étendant autour et selon la longueur de cette dernière, dont le poids par unité de longueur dudit conduit est déterminé pour contrecarrer au moins la poussée générée par le déplacement du volume liquide dudit conduit.

Le poids par unité de longueur du conduit 1 d'installation vide doit être ainsi supérieur à la masse d'eau déplacée.

L'immersion du conduit 1 ne doit cependant être ni trop rapide, ni trop lente. Le système de pose risque de bloquer, d'une part lorsque le conduit d'installation est trop lourd et tombe trop rapidement vers le fond 17, et d'autre part lorsque le conduit 1 d'installation est trop léger et entraîné par le courant. La vitesse d'immersion optimale dépend de la vitesse d'avancement du système de pose et par conséquent de la méthode de pose elle-même.

Avantageusement, le différentiel en poids du conduit 1 d'installation est compris entre 10 et 30 % du poids de l'eau déplacée, en fonction du diamètre dudit conduit et de la méthode de pose utilisée.

Conformément au mode d'exécution représenté à la figure 2, le lest périphérique 3 est réalisé par enroulement hélicoïdal autour de la gaine intérieure 2 de deux feuillards métalliques 4 et 5, relativement lourds. Chaque feuillard 4 et 5 est enroulé en formant un interstice 4a ou 5a c'est-à-dire en formant des spires 4b, 5b espacées et dont les bords juxtaposés délimitent des espaces. Cet enroulement est réalisé avec recouvrement des interstices intérieurs 4a par les spires extérieures 5b du feuillard externe 5. Les interstices 4a et 5a sont remplis par un matériau d'étanchéité 30, tel que gel de pétrole, poudre ou matériau équivalent de remplissage s'opposant au passage de l'eau ou autre fluide, tant longitudinalement que transversalement.

Une gaine extérieure 10 de serrage est disposée autour de l'armure métallique constituée par l'enroulement hélicoïdal des deux feuillards métalliques 4 et 5.

La gaine extérieure 10 sert à retenir le matériau d'étanchéité 30, en l'occurrence la graisse, et contribue à réaliser l'étanchéité.

La gaine extérieure 10 est également un agent de cohésion qui maintient la ou les armures métalliques.

La gaine extérieure 10 est par exemple constituée de polyéthylène et de polyamide.

Le matériau d'étanchéité 30 est avantageusement réalisé avec une graisse, à base de végétaux pour répondre aux critères et normes anti-pollution, enrobant également les spires 4b, 5b, de manière à réaliser une lubrification d'une spire 4b pour rapport à l'autre 5b. Ceci contribue à l'obtention de propriétés de flexibilité du conduit 1 d'installation. La lubrification des spires 4b, 5b favorise un léger mouvement relatif des spires 4b par rapport aux spires 5b, ce qui améliore sensiblement la flexibilité du conduit 1 d'installation. Cette flexibilité est très importante pour l'enroulement du conduit 1 sur des tourets 54 de stockage et pour sa manipulation . L'étanchéité longitudinale, c'est-à-dire par rapport à l'eau susceptible de s'infiltrer entre les feuillards métalliques 4, 5, est assurée jusqu'à plusieurs dizaines de bars.

Avantageusement, les graisses utilisées sont susceptibles d'absorber les ions hydrogènes, provenant d'une hydrolyse de l'eau et qui sont très nocifs pour des câbles optiques, lesquels absorbent lesdits ions hydrogènes.

Cette graisse sert également de lubrifiant vis-à-vis du déplacement relatif des spires entre elles et de la gaine extérieure 10 de serrage.

Conformément au mode d'exécution représenté à la figure 3, le lest périphérique 3 est une armure métallique, formée par un ruban métallique 6, relativement lourd, enveloppant entièrement la gaine 2, et dont les bords longitudinaux sont soit jointifs, et par exemple soudés, soit à recouvrement et jointoyés par une couche 6a de matière synthétique, faisant partie du ruban ou faisant l'objet d'un apport spécifique. Le ruban 6 est ondulé en 6b pour donner au tube armé, ainsi constitué, la souplesse nécessaire à sa mise en place.

Bien entendu, le métal du lest périphérique peut ou non résister à la corrosion, et être par exemple un acier inoxydable.

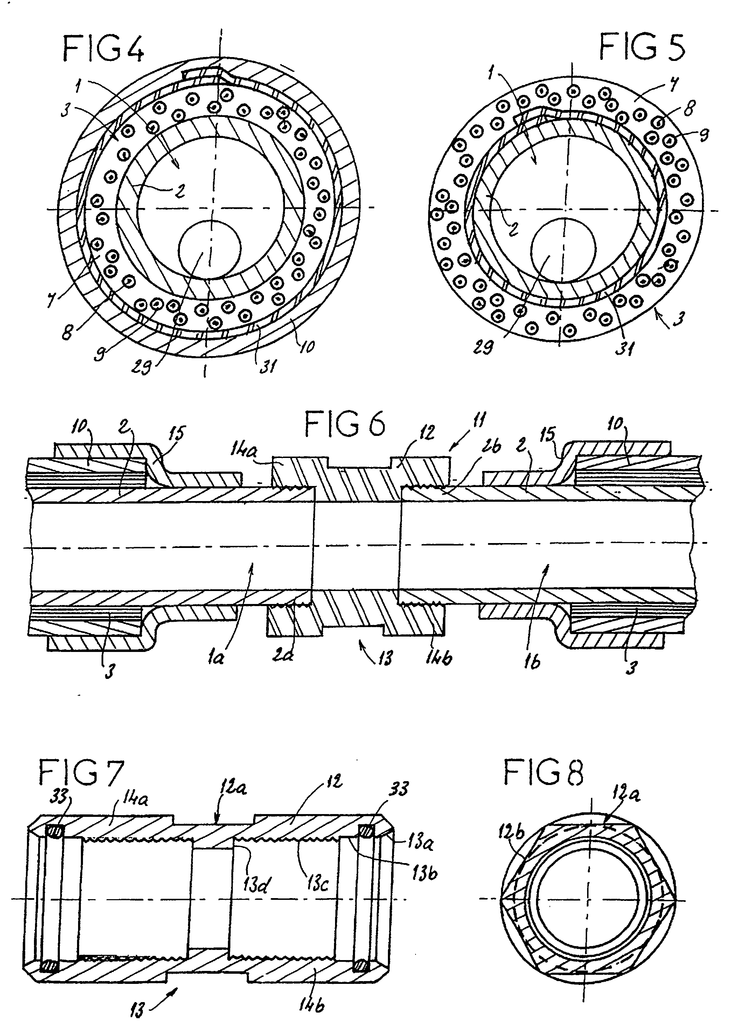

Conformément aux modes d'exécution des figures 4 et 5, le lest périphérique 3 est une garniture tubulaire entourant la gaine intérieure 2. Cette garniture comprend une matrice en matière plastique 7, dans laquelle sont distribués et noyés des grains métalliques 8, eux-mêmes revêtus d'une matière plastique 9, différente de celle de la matrice et ayant un point de fusion supérieur à celui de la matière plastique de la matrice. Cette caractéristique permet en particulier de coextruder, avec les grains métalliques 8, et la gaine intérieure 2, et la garniture tubulaire.

Conformément aux modes d'exécution des figures 2, 3, et 4, le lest périphérique 3 est recouvert par une gaine extérieure 10 obtenue également par extrusion d'une matière plastique, par exemple solidaire et liée au lest.

La ou les armures métalliques, par exemple deux enroulements hélicoïdaux de feuillard métallique relativement lourds, en association avec le matériau d'étanchéité 30, confèrent une étanchéité longitudinale remarquable au conduit 1.

En outre, ces armures métalliques réalisant le lest périphérique 3, confèrent également au conduit 1 conforme à l'invention la résistance mécanique nécessaire vis-à-vis de forces de compression centripètes, de valeurs considérables régnant à l'intérieur dudit conduit 1 lors d'opérations de soufflage, vis-à-vis des chocs inévitables lors de la pose dudit conduit 1, et vis-à-vis des forces de tirage.

Comme la résistance mécanique est assurée du moins en partie par le lest périphérique 3, le conduit 1 d'installation conforme à l'invention présente des avantages, aussi remarquables qu'inattendus. En effet, la gaine extérieure 10 réalise une enveloppe de serrage pour les armures métalliques et de confinement pour la graisse. Cette gaine extérieure 10 peut ainsi présenter une épaisseur relativement faible et ne contribue pas obligatoirement à renforcer mécaniquement le conduit 1.

Une autre conséquence très intéressante est que la gaine interne 2 peut présenter des propriétés de résistance mécanique moins prononcées que celles nécessaires habituellement pour des conduites subaquatiques. Là encore, c'est le lest périphérique 3 concentrique qui permet de par ses propriétés de résistance mécanique d'utiliser une gaine intérieure 2 de plus faible épaisseur, et le cas échéant moins résistante et moins coûteuse.

Un autre avantage remarquable du conduit 1 d'installation conforme à l'invention réside dans ses dimensions. Le diamètre et l'épaisseur de ces conduits 1 d'installation sont compatibles avec les dimensions des conduits d'installation terrestres, malgré des contraintes mécaniques, physiques et chimiques bien plus marquées lors de poses en milieu subaquatique. Le raccordement entre un conduit 1 d'installation subaquatique et un conduit terrestre s'effectue ainsi sans difficulté.

Dans les formes d'exécution des figures 4 et 5, l'étanchéité transversale dans chaque conduite 1 est assurée par un ruban métallique 31, par exemple en aluminium qui, de faible épaisseur et poids, est indépendant des moyens constituant le lest 3 et est disposé autour et selon la longueur de la gaine intérieure 2, dont les bords sont jointifs, et ce de manière étanche (cf. figures 4, 5 et 15 par exemple). Ce ruban est enduit sur une face d'une matière plastique dont le point de fusion est au plus égal à celui de la matière plastique composant les couches ultérieures du conduit, et par exemple de la gaine extérieure 10 à la figure 4 et de la garniture 7 à la figure 5. Il est disposé longitudinalement sur ladite garniture 7 ou sur la gaine intérieure 2, et de manière que ses bords longitudinaux recouvrants soient jointoyés par fusion de la matière plastique d'enduction lors de l'extrusion de la couche externe, à savoir, gaine 10 et garniture 7, respectivement pour les figures 4 et 5.

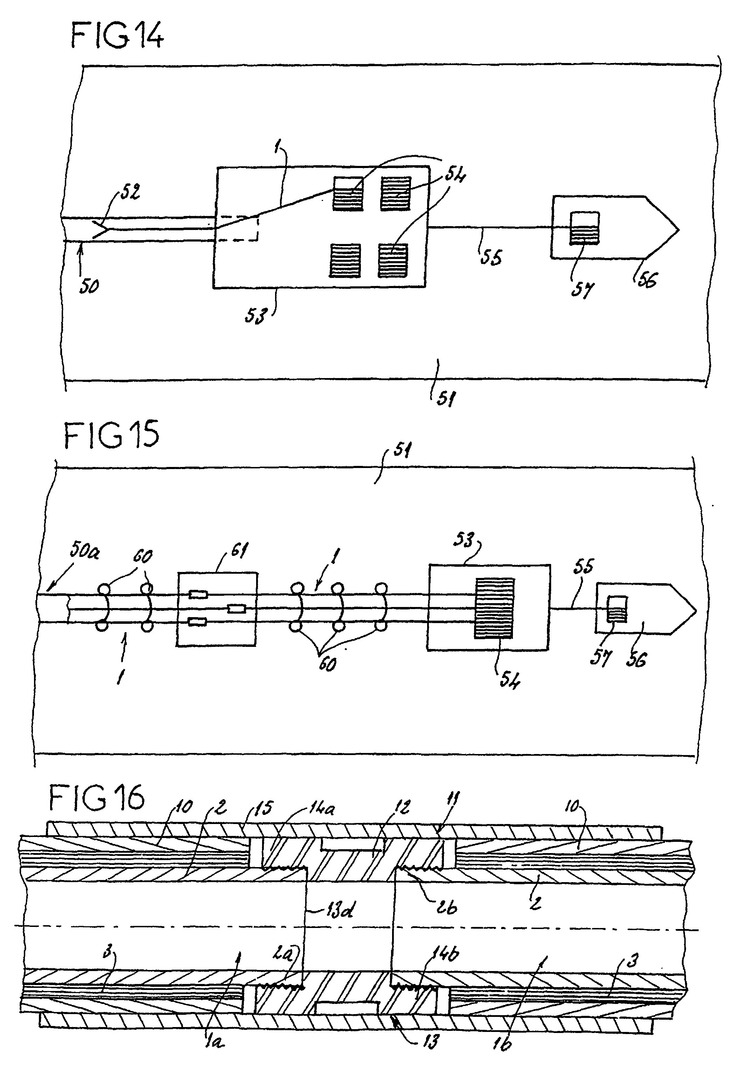

A la figure 13, représentant une variante de réalisation du lest périphérique 3, l'armure métallique est obtenue à l'aide d'éléments métalliques, tels que fils ou lames 32, de section transversale circulaire, méplate, trapézoïdale ou en losange, enroulés hélicoïdalement autour de la gaine 2, ou autour d'une gaine intermédiaire 2a, permettant de fixer et maintenir en contact d'étanchéité les bords longitudinaux d'un ruban métallique 31, ayant la même structure et la même fonction que celui 31 de la forme d'exécution donnée en référence aux figures 4 et 5.

Les intervalles entre lames ou fils 32 sont garnis par le matériau d'étanchéité 30. L'ensemble est protégé par la gaine extérieure 10 en matière synthétique.

Par conséquent, selon l'invention le conduit d'installation 1 est composite, et permet d'y disposer, par tirage, soufflage, ou poussage, tout tube ou câble, représenté par la référence numérique 29 aux figures 3 à 5 et 15.

Conformément aux figures 6 et 7, le dispositif de connexion 11 comprend un connecteur 12 pour assembler de manière étanche deux éléments 1a et 1b de conduit 1. Selon l'environnement, salin ou non, ce connecteur 12 est réalisé en métal, ou en matière synthétique. Le connecteur 12 est réalisé préférentiellement avec un matériau métallique inox, ou un aluminium protégé par un traitement de surface. Il comprend un manchon cylindrique 13, comportant deux embouts opposés 14a et 14b pour l'emmanchement étanche des deux extrémités 2a, 2b des deux gaines intérieures 2 des deux éléments de conduit 1a et 1b adjacents, respectivement. Chaque embout 14a et 14b comprend, intérieurement et allant de son extrémité libre jusqu'à mi-longueur du manchon 13, un chanfrein d'entrée 13a, un alésage cylindrique 13b avec une gorge pour un joint torique 33, une partie filetée 13c, avec un pas identique mais de sens inverse de celui de l'autre embout 14a, 14b, et une face de butée 13d réalisant un épaulement périphérique interne. Le joint 33 et le filetage 13c coopèrent avec la gaine intérieure 2 du conduit 1, gaine préalablement dénudée sur une courte longueur, comme montré à la figure 6.

Le dispositif de connexion 11 conforme à l'invention est remarquable dans le sens où le manchon 13 est constitué d'une pièce unique, dans laquelle sont rapportés des joints toriques 33, qu'il suffit de tourner pour obtenir un raccordement étanche entre les deux éléments 1a, 1b de conduit 1 d'installation.

Comme représenté aux figures 7 et 8, le connecteur 12 comporte une zone médiane 12a dans laquelle des méplats 12b lui donnent une forme transversale polygonale, par exemple hexagonale, permettant le serrage du connecteur 12 sur deux gaines intérieures 2, disposées dans le prolongement l'une de l'autre.

Le dispositif de connexion 11 comporte également deux gaines 15 en matière plastique thermo-rétractable. Chaque gaine 15 est thermo-rétractée sur l'extrémité de chacun des éléments de conduits 1 pour assurer la protection mécanique du lest périphérique 3 et éventuellement de la gaine extérieure 10 et éviter, lors des tractions exercées sur ce conduit pour le déplacer, que des corps étrangers s'insèrent entre l'armure ou lest 3 et l'une ou l'autre des gaines 2 et 10. Chaque gaine 15 assure également, au moins aux faibles pressions d'immersion, la protection étanche des composants du conduit 1.

Selon une variante d'exécution conforme à l'invention représentée à la figure 18, les deux gaines 15 peuvent être remplacées par une gaine thermo-rétractable unique emmanchée sur un élément de conduit 1a, 1b avant le montage du dispositif de connexion 11. Après la mise en place du dispositif de connexion 11, en l'occurrence le vissage du connecteur 12 sur les deux extrémités 2a, 2b des deux gaines intérieures 2, la gaine thermo-rétractable est coulissée sur le conduit 1 de manière à recouvrir l'extrémité de chacun des éléments 1a, 1b et le manchon 13 réalisant le connecteur 12.

Les bords coupés de la gaine extérieure 10 et du lest périphérique 3 s'étendent alors sensiblement jusqu'au connecteur 12 et sensiblement dans le prolongement de celui-ci. La continuité de l'étanchéité du conduit 1 est ainsi assurée par la thermo-rétraction de la gaine 15 sur la zone de connexion entre les éléments 1a et 1b.

L'assemblage de plusieurs portions de conduit 1 d'installation à l'aide de dispositifs de connexion 11 est par conséquent susceptible de subir des efforts mécaniques importants dans la mesure où ledit assemblage peut présenter une longueur allant de 0,5 à 2 kilomètres, par exemple pour la méthode d'ensouillage indirecte.

La bonne tenue mécanique entre les différents éléments 1a, 1b et les dispositifs de connexion 11 est d'autant plus remarquable que les connecteurs 12 sont vissés directement sur les gaines intérieures 2, lesquelles ne procurent pas en soi, du fait de l'absence localisée de lest périphérique 3, une résistance mécanique suffisante par rapport aux contraintes et aux chocs qu'elles pourraient subir. L'utilisation d'un dispositif de connexion 11 conforme à l'invention en association avec un conduit 1 d'installation tel que décrit précédemment donne ainsi des résultats surprenants par leur fiabilité dans le cadre des méthodes de pose en milieu subaquatique.

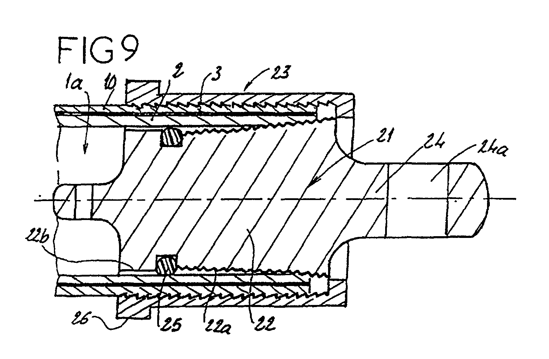

Le dispositif de traction 21 représenté à la figure 9 est composé d'un noyau 22, et d'une bague extérieure 23. Le noyau 22, de forme générale cylindrique, comprend une partie tronconique filetée 22a et, dans le prolongement de la partie de petit diamètre du cône, une partie cylindrique 22b munie d'une gorge pour un joint d'étanchéité torique 25. Le noyau 22 se prolonge, au-delà de la partie de grand diamètre du cône, par une queue de traction 24 munie d'un oeil d'accrochage 24a. Ce noyau 22 a des dimensions diamétrales lui permettant d'être vissé à l'intérieur de la gaine intérieure 2.

A titre de variante du dispositif de traction 21 conforme à l'invention, la partie cylindrique 22b munie d'une gorge pour un joint d'étanchéité torique 25 peut être supprimée ou remplacée par un allongement de la partie tronconique filetée 22a.

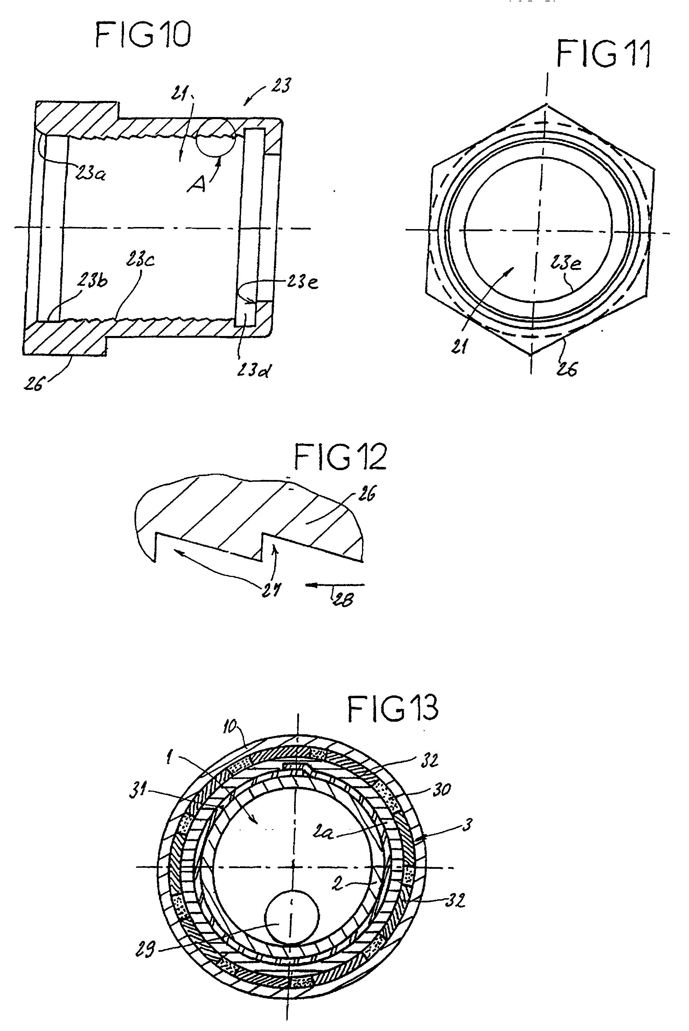

Comme montré plus en détails aux figures 10 et 11, la bague extérieure 23, de forme générale extérieure cylindrique, est munie, à l'une de ses extrémités, d'un collet hexagonal 26 permettant d'assurer son calage en rotation au moyen d'une clé. Intérieurement, et en partant de ce collet 26, elle comprend un chanfrein d'entrée 23a, un alésage cylindrique lisse 23b, un alésage fileté 23c, une gorge de dégagement 23d et un épaulement interne 23e, formant butée d'engagement.

La figure 12 montre que le filetage de la bague extérieure 23 a une section en triangle rectangle et forme donc des crans hélicoïdaux 27 s'opposant à tous déplacements dans le sens de la flèche 28 du lest périphérique 3 ou de la gaine extérieure 10 du conduit 1 autour duquel la bague extérieure 23 est disposée.

D'autres filetages que celui décrit à la figure 12 peuvent également convenir sans sortir du cadre de la présente invention.

Lors du montage du dispositif sur l'extrémité d'un conduit 1, la bague extérieure 23 est d'abord mise en place autour de cette extrémité, éventuellement jusqu'à la butée de son épaulement 23e sur la face en bout du conduit 1, puis le noyau 22 est engagé, et vissé dans le conduit 1. Cela a pour conséquence de comprimer la ou les parois des éléments composant le conduit 1 entre les deux filetages, respectivement 22a du noyau 22 et 23c de la bague 23, et d'assurer, par incrustation de ces filetages dans lesdites parois, la liaison mécanique positive entre ledit conduit 1 et le dispositif de traction 21. L'étanchéité ainsi obtenue est le cas échéant doublée par le joint 25.

Ce montage, très simple, est réalisé sur le chantier d'installation et procure une excellente liaison mécanique, mais aussi l'étanchéité souhaitée en milieu subaquatique.

Lors du déplacement du conduit 1 par tirage sur le dispositif 21, les composants de ce conduit 1 ne peuvent pas s'échapper par fluage puisque, d'un côté, ils en sont empêchés par les dents 27 et, de l'autre côté, par l'épaulement 23e de la bague extérieure 23.

La mise en place de tels réseaux subaquatique est effectuée à l'aide par exemple de méthodes d'ensouillage.

On connaît ainsi la méthode d'ensouillage directe, schématisée à la figure 14, qui consiste à enfouir le conduit 1 d'installation dans une tranchée 50 creusée dans le lit d'un fleuve 51 à l'aide d'une charrue 52 portant un soc inerte ou vibrant. Cette charrue 52 est tractée par une barge 53 sur laquelle est stocké le conduit 1 d'installation . Ce dernier est enroulé sur des tourets 54. La barge 53 est elle-même tirée par un câble 55 fixé sur un remorqueur 56 localisé sensiblement au milieu du fleuve 51 et ancré au fond 17.

Le câble 55 fixé sur le remorqueur 56 par l'intermédiaire d'un treuil 57, lequel permet de tirer et de déplacer la barge 53 ainsi que la charrue 52.

On connaît également une méthode d'ensouillage indirecte, schématisée à la figure 15, dans laquelle par exemple plusieurs conduits 1 d'installation sont assemblés ou ligaturés sur une barge 53.

L'assemblage est ensuite amené sur le lit d'un fleuve 51 ou il est soutenu en surface par des ballonnets 60. Les conduits 1 sont raccordés sur un ponton de raccordement 61 en surface pour réaliser des longueurs d'environ 0,5 à 2 kilomètres. Une fois en position à la verticale de la ligne d'enfouissement, les conduits 1 sont coulés en retirant les ballonnets 60.

Lorsque le faisceau du conduit 1 repose sur le fond 17 du fleuve, une ensouilleuse à jet d'eau permet d'enfouir le faisceau de conduits 1.

Les conduits 1 sont coulés et reposent sur le fond 17, à l'emplacement repéré par la référence 50a.

Un système d'ancrage de dispositif d'immobilisation 16 permettant de maintenir en place le faisceau, peut également être utilisé dans l'une ou l'autre des méthodes, en remplacement de l'ensouillage, lorsqu'il n'y a pas de risques de dragage et lorsque les courants sont très faibles.

Il est particulièrement important pour mettre en oeuvre de tels méthodes, de disposer de conduits 1 dont la vitesse d'immersion est parfaitement contrôlée de manière à éviter des blocages du mécanismes de pose. La vitesse d'ensouillage et la vitesse d'avancement du train d'ensouillage sont donc liées au poids du conduit 1, ledit poids déterminant sa vitesse d'immersion.

Par ailleurs, il est de grande importance de pouvoir connecter deux conduits 1 facilement à l'aide du dispositif de connexion 11, soit sur la barge 54, soit sur le fond 17 en cas de rupture accidentelle. Il est également indispensable pour tirer sur les conduits 1, avec une force importante pour mettre bout à bout deux conduits 1 destinés à être raccordés. Un tel positionnement est obtenu de façon simple et fiable avec le dispositif de traction 21.

## Revendications

1. Conduit (1) d'installation pour le transport subaquatique de fluide, d'énergie ou de signaux, constitué par au moins une gaine intérieure (2), une armure métallique (4, 5), comportant au moins un enroulement hélicoïdal (4, 5, 32) d'un feuillard métallique dont les spires ménagent entre elles un interstice (4a, 5a), et une gaine extérieure (10) disposée autour de l'armure métallique (4,5,6,32) **caractérisé en ce que** les interstices (4a, 5a) sont étanchés avec un matériau d'étanchéité (30), du type graisse, servant de lubrifiant vis-à-vis du déplacement relatif des spires entre-elles et de la gaine extérieure (10), laquelle constitue une gaine de serrage extérieure et de confinement de la graisse, l'armure métallique (4,5,6,32) enroulée autour de la gaine (2) constituant avec la graisse un moyen d'étanchéité, dont le poids par unité de longueur est calibré pour constituer un lest périphérique (3) de sorte que le poids par unité de longueur du conduit est supérieur au poids d'eau déplacé par son immersion.

2. Conduit (1) d'installation selon la revendication 1, **caractérisé en ce que** le poids par unité de longueur dudit conduit (1) est supérieur de 10 à 30 % du poids d'eau déplacée par ledit conduit (1).

3. Conduit (1) d'installation selon la revendication 2, **caractérisé en ce que** l'armure métallique est obtenue à l'aide d'un enroulement hélicoïdal concentrique autour de la gaine intérieure (2) de deux feuillards métalliques (4 et 5) relativement lourds, dont les spires (4b, 5b) forment des interstices (4a, 5a) et sont décalées de manière que les spires extérieures (5b) recouvrent les interstices (4a) entre spires intérieures (4b), lesdits interstices étant remplis par le matériau d'étanchéité (30) de manière à assurer une bonne étanchéité longitudinale dudit conduit (1).

4. Conduit (1) d'installation selon la revendication 1 ou 3, **caractérisé en ce que** le matériau d'étanchéité de type graisse est à base d'un matériau absorbant les ions hydrogènes issus d'une éventuelle hydrolyse de l'eau.

5. Conduit (1) d'installation selon la revendication 1, ou 3, **caractérisé en ce que** l'armure métallique est obtenue à l'aide d'un enroulement hélicoïdal d'éléments métalliques (32) ayant une section transversale choisie parmi les sections suivantes circulaire, méplate, trapézoïdale, en losange, avec garnissage dans les intervalles par un matériau d'étanchéité (30).

6. Conduit (1) d'installation selon l'une quelconque des revendications 1 à 5, **caractérisé en ce que** le moyen d'étanchéité comporte un ruban métallique (31) de faible épaisseur disposé autour et selon la longueur de la gaine intérieure (2), dont les bords sont jointifs et ce de manière étanche.

## Patentansprüche

1. Installationsleitung (1) zum Transportieren von Flüssigkeiten, Energie oder Signalen unter Wasser, bestehend aus mindestens einer inneren Hülle (2), einer metallischen Armierung (4, 5) mit einem spiralförmigen Wickel (4, 5, 32) eines metallischen Bandes, dessen Windungen zwischen sich einen Zwischenraum (4a, 5a) aufweisen, und einer äußeren, um die metallische Armierung (4, 5, 6, 32) herum angeordneten Hülle (10), **dadurch gekennzeichnet, daß** die Zwischenräume (4a, 5a) mit einem Dichtungsmaterial (30) aus Fett abgedichtet sind, das als Schmierung hinsichtlich der Relativbewegung der Windungen zueinander und zur äußeren Hülle (10) dient, die eine äußere Spannhülle sowie eine Kapselung für das Fett bildet, und daß die um die Hülle (2) herum gewickelte metallische Armierung (4, 5, 6, 32) zusammen mit dem Fett eine Dichtungsanordnung bildet, deren Gewicht pro Längeneinheit so bemessen ist, daß sie einen am Umfang angeordneten Ballast bildet, wobei das Gewicht pro Längeneinheit der Leitung größer bemessen ist als das Gewicht der bei ihrem Eintauchen verdrängten Wassermenge.

2. Installationsleitung (1) nach Anspruch 1, **dadurch gekennzeichnet, daß** das Gewicht pro Längeneinheit der Leitung (10) um 10 bis 30% größer bemessen ist als das Gewicht der von der Leitung (10) verdrängten Wassermenge.

3. Installationsleitung (1) nach Anspruch 2, **dadurch gekennzeichnet, daß** die metallische Armierung ausgebildet wird, indem zwei relativ schwere metallische Bänder (4, 5) spiralförmig und konzentrisch um die innere Hülle (2) herum gewickelt werden, wobei die Windungen (4b, 5b) der Bänder (4, 5) Zwischenräume (4a, 5a) bilden und gegeneinander derart versetzt sind, daß die äußeren Windungen (5b) die Zwischenräume (4a) zwischen inneren Windungen (4b) überdecken, und wobei ferner die Zwischenräume mit dem Dichtungsmaterial (30) ausgefüllt sind, um eine gute Dichtheit der Leitung (1) in Längsrichtung zu gewährleisten.

4. Installationsleitung (1) nach Anspruch 1 oder 3, **dadurch gekennzeichnet, daß** das Dichtungsmaterial aus Fett auf der Grundlage eines Materials hergestellt ist, das die bei einer möglichen Hydrolyse des Wassers erzeugten hydrogenen Ionen absorbiert.

5. Installationsleitung (1) nach Anspruch 1 oder 3, **dadurch gekennzeichnet, daß** die metallische Armierung ausgebildet wird, indem metallische Elemente (32) spiralförmig gewickelt werden, deren radiale Querschnittsfläche aus den Querschnittsflächen kreisförmig, halbflach, trapezförmig und rhombisch ausgewählt ist, und mit einer Ausfüllung der Zwischenräume mit einem Dichtungsmaterial (30).

6. Installationsleitung (1) nach einem der Ansprüche 1 bis 5, **dadurch gekennzeichnet, daß** die Dichtungsanordnung einen metallischen Streifen (31) geringer Dicke umfaßt, der um die innere Hülle (2) herum und entlang dieser angeordnet ist und dessen Ränder dicht aneinanderstoßen.

## Claims

1. Installation conduit (1) for the underwater transport of fluid, energy or signals, consisting of at least one inner sheath (2), a metal armour (4, 5), comprising at least one helical winding (4, 5, 32) of a metal tape, the turns of which leave an interstice (4a, 5a) between them, and an outer sheath (10) placed around the metal armour (4, 5, 6, 32), **characterized in that**, the interstices (4a, 5a) are sealed with a sealing material (30), of the grease type, serving as lubricant to the relative displacement of the turns with respect to one another and of the outer sheath (10), which sheath forms an outer binding and grease-confining sheath, the metal armour (4, 5, 6, 32) wound around the sheath (2) forming with the grease a sealing means, the weight per unit length of which is calibrated in order to form a peripheral ballast (3), so that the weight per unit length of the conduit is greater than the weight of water displaced by its immersion.

2. Installation conduit (1) according to Claim 1, **characterized in that** the weight per unit length of the said conduit (1) is from 10 to 30% more than the weight of water displaced by the said conduit (1).

3. Installation conduit (1) according to Claim 2, **characterized in that** the metal armour is obtained by means of a concentric helical winding of two relatively heavy metal tapes (4 and 5) around the inner sheath (2), the turns (4b, 5b) of which form interstices (4a, 5a) and are offset so that the outer turns (5b) cover the interstices (4a) between inner turns (4b), the said interstices being filled with the sealing material (30) so as to ensure good longitudinal sealing of the said conduit (1).

4. Installation conduit (1) according to Claim 1 or 3, **characterized in that** the sealing material of the grease type is based on a material which absorbs the hydrogen ions resulting from possible hydrolysis of the water.

5. Installation conduit (1) according to Claim 1 or 3, **characterized in that** the metal armour is obtained with the aid of a helical winding of metal elements (32) having a cross section chosen from the following cross sections: circular, flatted, trapezoidal or rhombic, with packing in the gaps with a sealing material (30).

6. Installation conduit (1) according to any one of Claims 1 to 5, **characterized in that** the sealing means comprises a thin metal tape (31) placed around and along the inner sheath (2), the edges of which are touching and so as to be sealed.
